**Europäisches Patentamt**

**European Patent Office**

**Office européen des brevets**

(19)

(11) Veröffentlichungsnummer: **0 070 519**
A2

# (12) EUROPÄISCHE PATENTANMELDUNG

(21) Anmeldenummer: **82106316.1**

(22) Anmeldetag: **14.07.82**

(51) Int. Cl.³: **G 01 D 15/24**

(30) Priorität: **15.07.81 DE 3127992**

(43) Veröffentlichungstag der Anmeldung: **26.01.83**
**Patentblatt 83/4**

(84) Benannte Vertragsstaaten: **CH FR IT LI NL SE**

(71) Anmelder: **Hellige GmbH,**
**Postfach 728 Heinrich-von-Stephan-Strasse 4,**
**D-7800 Freiburg (DE)**

(72) Erfinder: **Orzikowski, Günter, Altschlössleweg 5,**
**D-7801 Au (DE)**
Erfinder: **Niethhammer, Rudolf, Lindenstrasse 1,**
**D-7800 Freiburg im Breisgau (DE)**
Erfinder: **Bahr, Jochen, Mettackerweg 4,**
**D-7800 Freiburg im Breisgau (DE)**

(74) Vertreter: **Patentanwälte TER MEER - MÜLLER -**
**STEINMEISTER, Triftstrasse 4, D-8000 München 22 (DE)**

(54) Winkelstellungsgeber in Antriebssystemen für Schreiborgane schnellschreibender Hebelstreifenschreiber.

(57) Die Erfindung betrifft Winkelstellungsgeber (8) in Antriebssystemen für Schreiborgane (1) schnellschreibender Hebelstreifenschreiber mit begrenztem Drehwinkelbereich.

Als Vorteil der Erfindung gegenüber bekannten Winkelstellungsgebern in Antriebssystemen für Schreiborgane schnellschreibender Hebelstreifenschreiber entfallen aufwendige elektronische Schaltungen zur Erzeugung der Speisesignale für Winkelstellungsgeber ebenso wie Demodulatorschaltungen zur Gewinnung der der Winkelposition der Rotoren proportionalen elektrischen Signale aus den trägerbehafteten Geberausgangssignalen. Auf Abschirmmassnahmen gegen elektrische und/oder magnetische Störfelder oder gegen Fremdlichteinfall kann verzichtet werden. Durch den erfindungsgemässen Kennlinienverlauf des Winkelstellungsgebers werden lineare Aufzeichnungen bei jeder beliebigen Winkelstellung innerhalb des zulässigen Ausschlagbereichs des Rotors des Antriebssystems ermöglicht.

Der erfindungsgemässe Winkelstellungsgeber ist im Vergleich zu anderen Winkelstellungsgebern kostengünstiger herstellbar.

**PATENTANWÄLTE** 0070519

# TER MEER-MÜLLER-STEINMEISTER

Beim Europäischen Patentamt zugelassene Vertreter — Professional Representatives before the European Patent Office
Mandataires agréés près l'Office européen des brevets

Dipl.-Chem. Dr. N. to. Meer
Dipl.-Ing. F. E. Müller
Triftstrasse 4,
D-8000 MÜNCHEN 22

Dipl.-Ing. H. Steinmeister
Artur-Ladebeck-Strasse 51
D-4800 BIELEFELD 1

Mü/cb

Case PW-P 457-EP                    14. Juli 1982

HELLIGE GMBH

Heinrich-von-Stephan-Straße 4

D - 7800 Freiburg im Breisgau

---

Winkelstellungsgeber in Antriebssystemen für Schreiborgane schnellschreibender Hebelstreifenschreiber

---

Priorität: 15. Juli 1981,Bundesrepublik Deutschland, P 31 27 992.9

Die Erfindung betrifft Winkelstellungsgeber in Antriebssystemen für Schreiborgane schnellschreibender ein- und
mehrkanaliger Hebelstreifenschreiber mit begrenztem Drehwinkelbereich.

Bekannt sind Antriebssysteme für Schreiborgane schnell-schreibender Hebelschreiber mit mechanischen Rückstell-federn zur Rückstellung der Schreiborgane auf den Nullpunkt nach Auslenkung.

Weiterhin sind Antriebssysteme für Schreiborgane schnell-schreibender Hebelschreiber mit verbesserten Wiedergabe-eigenschaften bekannt, die mit Winkelstellungsgebern zur Ermittlung der Winkelstellung des Rotors des Antriebssystems ausgerüstet sind. Hierbei bilden Antriebssystem mit Stellungsgeber und der die Treiberspule(n) beaufschlagende Leistungsverstärker einen geschlossenen Regelkreis. An einer ersten Eingangsklemme des Leistungsverstärkers mit Differenzeingang liegt das der zu registrierenden Größe proportionale elektrische Singal an, während die zweite Eingangsklemme von dem elektrischen Signal beaufschlagtwird, das der vom Winkelstellungsgeber festgestellten Winkelstellung des Rotors des Antriebssystems proportional ist. Der Leistungsverstärker verstärkt die Differenz der an seinen beiden Eingangsklemmen anliegenden Signale, die der Abweichung von der theoretisch erwarteten Soll-Winkelstellung zur vom Winkelstellungsgeber tatsächlich ermittelten Ist-Winkelstellung des Rotors entspricht. Der Leistungsverstärker erzeugt an seinem Ausgang ein der Differenz von Sollwert zu Istwert entsprechenes Korrektursignal und beaufschlagt mit diesem die Treiberspule(n) des Antriebssystems. Der in der/den Treiberspule(n) fließende Strom bewirkt eine der Abweichung der Winkelstellung des Rotors vom Sollwert entsprechende Drehung desselben und sorgt bei entsprechender Dimensionierung des Leistungsverstärkers für vollständigen Ausgleich der Regelabweichung. Der Winkelstellungsgeber übernimmt im Zusammenwirken mit dem Leistungsverstärker und dem Antriebssystem die Funktion der obengenannten Rückstellfeder.

Bekannte Winkelstellungsgeber für Antriebssysteme von Schreiborganen arbeiten nach unterschiedlichen physikalischen Prinzipien.

Zum Einsatz kommen induktive Winkelstellungsgeber nach dem Differenztransformatorprinzip, kapazitive Winkelstellungsgeber nach dem Differenzkondensatorprinzip oder optische Winkelstellungsgeber nach dem Prinzip des Differenzaufnehmers mit veränderlicher Blendenöffnung für das durch die Blende hindurchtretende Licht.

Alle aufgeführten Stellungsgeber erfordern zur Herstellung ihrer Funktionsbereitschaft spezielle Maßnahmen, indem sie entsprechend ihrem physikalischen Prinzip mit angepaßten Erregersignalen zu speisen sind.

Für induktive oder kapazitive Winkelstellungsgeber sind eingangsseitig Hochfrequenzspannungen mit unter Umständen hohen Spannungswerten notwendig. Die erforderlichen Spannungen müssen durch aufwendige elektronische Schaltungen, beispielsweise durch Hochfrequenzgeneratoren, erzeugt werden. Gegebenenfalls müssen aufwendige Abschirmmaßnahmen gegen magnetische und/oder elektrische Felder vorgesehen werden.

Induktive oder kapazitive Winkelstellungsgeber erfordern ausgangsseitig zusätzlichen Aufwand an elektronischen Bauteilen zur Demodulation des trägerbehafteten Geberausgangssignals. Demodulatoren beeinflussen die Phasenlage des demodulierten Signals in unerwünschter Weise. Hierdurch ergibt sich eine Verringerung der oberen Grenzfrequenz des Antriebssystems, da unter Beachtung der Phasenrandbeziehungen stabiles Regelverhalten des geschlossenen Regelkreises nur bei entsprechend der Phasendrehung von nichtmoduliertem zu moduliertem Winkelpositionssignal re-

0070519

duzierter oberer Grenzfrequenz erreichbar ist.

Optische Stellungsgeber benötigen Lichtquellen hoher zeitlicher Konstanz und langer Lebensdauer. Darüber hinaus
sind besondere Maßnahmen gegen Fremdlichteinfall und/oder
unerwünschter Reflexionen von der Lichtquelle auf den
Lichtempfänger erforderlich.

Allen genannten Winkelstellungsgebern ist gemeinsam, daß
zur Übertragung der als mechanische Meßgröße vorliegenden Winkelstellung des Rotors in den elektrischen Teil
des Winkelstellungsgebers massebehaftete Maßnahmen vorgesehen werden müssen, deren polare Massenträgheitsmomente
gegenüber den polaren Massenträgheitsmomenten der übrigen
zu bewegenden Elemente nicht vernachlässigbar klein sind.
Durch die zusätzlich anzutreibenden Massen wird das gesamte polare Massenträgheitsmoment in unerwünschter Weise
vergrößert, hierdurch wird die obere Grenzfrequenz des
Antriebssystems nochmals zusätzlich verringert, da für
die Bewegung der Zusatzmassen zusätzliches Drehmoment erforderlich ist, das vom gesamten, vom Antriebssystem aufbringbaren Drehmoment abgezweigt werden muß.

Infolge der geometrischen Verhältnisse, bedingt durch die
Anordnung der Antriebssysteme in der Transporteinrichtung
für den Aufzeichnungsträger ändert sich bei Ausschlag des
Schreiborgans dessen wirksame Länge. Die wirksame Länge
des Schreiborgans ist definiert durch den Abstand des
Mittelpunkts der Rotorachse bzw. deren gedachter Verlängerung zum Auflagepunkt des Schreiborgans auf dem unter
Vorspannung über die Schreibkante des Streifenschreibers
transportierten Aufzeichnungsträgers, gemessen in der Ebene, die entlang der Schreibkante senkrecht zur Rotorachse
des Antriebssystems aufgespannt wird. Durch die beschriebene Änderung der wirksame Länge des Schreiborgans entstehen bei Ausschlag des Schreiborgans aus seiner Ruhelage mit Linearitätsfehlern behaftete Aufzeichnungen, sofern zur Positionsrückmeldung des Rotorwinkelausschlags Winkelstellungsgeber mit winkellinearem Übertragungsverhalten Verwendung finden. Der Betrag des Linearitätsfehlers erreicht bei maximalen Winkelausschlägen des Rotors, d. h. an den Rändern des vom Schreiborgan auf dem Aufzeichnungsträger überstrichenen Schreibbereichs seinen größten Wert.

Der Erfindung liegt damit die Aufgabe zugrunde, einen Winkelstellungsgeber zu schaffen, der zusätzliche elektronische Maßnahmen zur Speisung beispielsweise mit hochfrequenten Spannungen oder zur Demodulation des Geberausgangssignals nicht erfordert, der das gesamte polare Massenträgheitsmoment nicht oder nur unwesentlich vergrößert, der besondere Abschirmmaßnahmen überflüssig macht und zudem lineare Aufzeichnungen von Meßgrößen ermöglicht.

Diese Aufgabe wird erfindungsgemäß durch die im Patentanspruch 1 angegebenen Maßnahmen gelöst.

Vorteilhafte Weiterbildungen des Erfindungsgedankens sind im Unteranspruch gekennzeichnet.

Die Erfindung bietet gegenüber bekannten Winkelstellungsgebern den wesentlichen Vorteil, daß zur Erzeugung des der Winkelstellung des Rotors proportionalen elektrischen Signals spezielle Generatoren und Demodulatoren nicht benötigt werden und somit vom Standpunkt des Regelungstechnikers unerwünschte Phasenverschiebungen nicht auftreten können, daß besondere Abschirmmaßnahmen gegen magnetische und/oder elektrische Störfelder oder gegen Fremdlichteinfall nicht notwendig sind und daß bei vernachlässigbar geringer Vergrößerung des gesamten polaren Massenträgheitsmoments lineare Aufzeichnungen von Meßgrößen erhalten werden.

Die Erfindung wird nachfolgend unter Bezug auf die Zeichnungen in beispielsweisen Ausführungsformen näher erläutert. Es zeigen:

Fig. 1    ein Antriebssystem für Schreiborgane schnellschreibender Hebelschreiber mit Potentiometer
          als Winkelstellungsgeber in schnittbildlicher
          Darstellung und zugehörigem Leistungsverstärker mit Differenzeingang;

Fig. 2    eine ebene Abwicklung einer möglichen Ausfüh-
          rungsform der Widerstandsschicht des erfin-
          dungsgemäßen Winkelstellungsgebers;

Fig. 3    den Verlauf der Kennlinie des erfindungsgemäßen Winkelstellungsgebers als Funktion des elek-
          trichen Ausgangssignals des Winkelstellungsge-
          bers über dem Winkelausschlag; und

Fig. 4    den vom Rotor des Antriebssystems bei seinen
          Drehbewegungen überstrichenen Drehwinkelbereich.

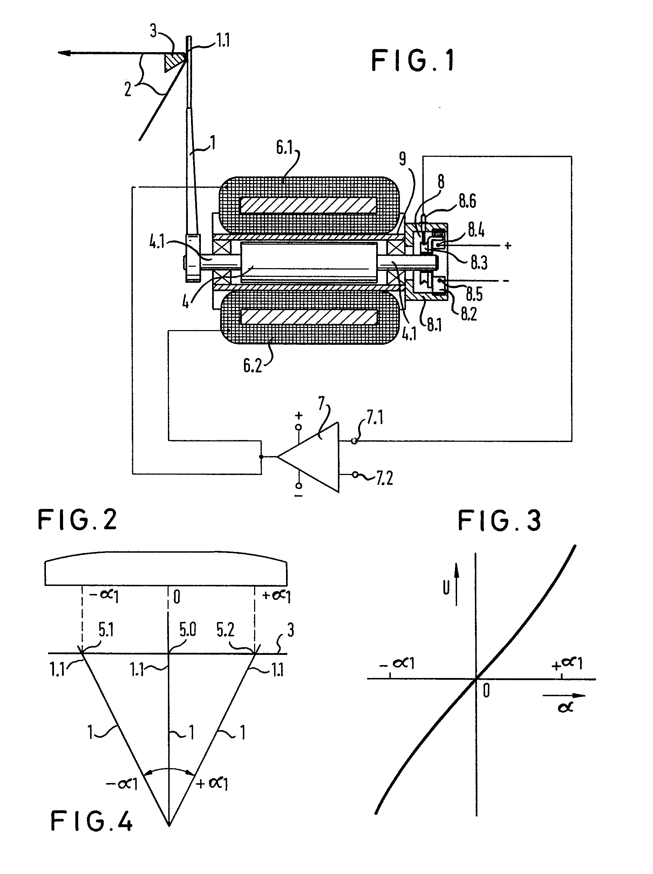

In Fig. 1 stellt 1 das Schreiborgan eines Hebelstreifenschreibers dar. Je nach Ausführung des Schreibers ist
die Schreiborganspitze 1.1 in Abhängigkeit von dem verwendeten Aufzeichnungsträger 2 ungeheizt oder geheizt.
Der Aufzeichnungsträger 2 wird von einer nicht dargestellten Antriebsvorrichtung mit unterschiedlichen, wählbaren
Geschwindigkeiten unter Vorspannung über die Schreibkante
3 bewegt.

0070519

Der auf der Schreibkante 3 aufliegende Aufzeichnungsträger 2 wird durch die Berührung mit der Schreiborganspitze 1.1 mit einer Markierungsspur versehen, deren Verlauf dem Verlauf des zu registrierenden Meßsignals entspricht.

Das Schreiborgan 1 ist an seinem der Schreiborganspitze 1.1 gegenüberliegenden Ende an der Rotorachse 4.1 des Rotors befestigt. Der Rotor 4 führt um seine Mittel(null)-stellung innerhalb eines begrenzten Winkelbereichs Drehbewegungen aus.

Fig. 4 zeigt in schematischer Darstellung den begrenzten Drehwinkelbereich des Rotors 4 und des an ihm befestigten Schreiborgans 1 auf der andeutungsweise dargestellten Schreibkante 3. Mit 5.0 ist die Mittel(null)stellung des Schreiborgans 1 gekennzeichnet, mit 5.1 entsprechend $-\alpha_1$ das eine Ende des Ausschlagbereichs des Schreiborgans 1 bzw. des Winkelbereichs des Rotors 4 und mit 5.2 entsprechend $+\alpha_1$ das andere Ende des Ausschlagbereichs.

Der Rotor 4 des in Fig. 1 dargestellten Antriebssystems für Schreiborgane erfährt Drehbewegungen infolge des Stroms durch die Treiberspulen 6.1 und 6.2, wobei die Drehrichtung des Rotors 4 von der Polarität und die Größe der Drehbewegung vom Betrag des Spulenstroms abhängig ist.

In bezug auf den Ausgang des Leistungsverstärkes 7 sind die gemäß Fig. 1 beispielhaft dargestellten Treiberspulen 6.1 und 6.2 parallel geschaltet. Die Serienschaltung beider Treiberspulen 6.1 udn 6.2 ist ebenfalls möglich, auch können Antriebssysteme für Schreiborgane mit einer anderen Anzahl von Treiberspulen, beispielsweise einer einzigen Spule, ausgerüstet sein.

0070519

Der Leistungsverstärker 7 verstärkt die an seinen beiden Eingangsklemmen 7.1 und 7.2 anliegende Differenz der Eingangssignale. Die Eingangsklemme 7.1 wird von dem vom Winkelstellungsgeber 8 gemessenen, dem Ist-Winkelausschlag des Rotors 4 proportionalen elektrischen Signal beaufschlagt, die Eingangsklemme 7.2 von dem der zu registrierenden Meßgröße proportionalen elektrischen Signal entsprechend dem Soll-Winkelausschlag des Rotors 4.

Der Winkelstellungsgeber 8 ist ein Potentiometer, dessen Gehäuse 8.1 mit der Achse des Rotors 4 fluchtend mit dem Grundkörper 9 des Antriebssystems verbunden ist. An der Innenwand des Gehäuses 8.1 ist die Widerstandsbahn 8.2 angebracht. Der drehbewegliche Abgriff 8.3 des Potentiometers ist isoliert an der Rotorachse 4.1 befestigt, er greift den dem Winkelausschlag des Rotors 4 proportionalen Spannungswert auf der Widerstandsbahn 8.2 des Potentiometers ab.

Die Widerstandsbahn 8.2 wird an ihren Enden 8.4 und 8.5 mit Erregerspannung aus einer nicht dargestellten Spannungsquelle gespeist. Bei einem Streifenschreiber gemäß der vorliegenden Erfindung erfolgt die Speisung des Potentiometers zur Messung der Winkelstellung in zweckmäßiger Weise aus den Spannungsquellen, die ohnehin für die Versorgung weiterer elektronischer Komponenten, beispielsweise von Verstärkern, erforderlich sind.

In Fig. 3 ist der Verlauf der Kennlinie des erfindungsgemäßen Winkelstellungsgebers 8 dargestellt. Auf der Abszissenachse ist im linearen Maßstab der Drehwinkel $\alpha$ des Rotors 4 aufgetragen, auf der Ordinatenachse das an der Anschlußklemme 8.6 für den drehbeweglichen Abgriff 8.3 abgreifbare elektrische Signal U des Winkelstellungsgebers 8.

- 9 -

0070519

Der Kennlinienverlauf des Signals U über dem Drehwinkel entspricht zumindest innerhalb des Winkelbereichs von $-\alpha_1$ bis $+\alpha_1$ dem Verlauf der Tangensfunktion. Durch die tangensförmige Kennlinie des Winkelstellungsgebers 8 ergeben sich auf dem Aufzeichnungsträger 2 lineare Aufzeichnungen. Würde ein Winkelstellungsgeber mit winkellinearem Übertragungsverhalten für die Rückmeldung der Winkelstellung des Rotors verwendet werden, so ergäben sich aufgrund der geometrischen Verhältnisse bei Hebelstreifenschreibern mit Kantenschrieb nichtlineare Aufzeichnungen auf dem Aufzeichnungsträger 2.

Patentansprüche

1.    Antriebssystem für Schreiborgane schnellschreibender Hebelschreiber, in denen der Aufzeichnungsträger quer zu seiner Ablaufrichtung über eine Kante gezogen wird, mit

- einem Rotor und einem Potentiometer zur Erzeugung eines vom Drehwinkel des Rotors abhängigen elektrischen Schleifersignals, dessen Gehäuse mit der Achse des Rotors fluchtend am Grundkörper des Antriebssystems befestigt ist und dessen Schleifer isoliert an der Rotorachse angebracht ist,

- Mitteln zur Speisung der Widerstandsbahn des Potentiometers an deren Enden aus einer Speisespannungsquelle und

- mindestens einer Treiberspule, die vom Ausgangssignal eines Leistungsverstärkers mit Differenzeingang beaufschlagt ist,

d a d u r c h   g e k e n n z e i c h n e t , daß das an der Anschlußklemme (8.6) für den drehbeweglichen Abgriff (8.3) des Potentiometers (8) abgreifbare elektrische Signal durch Formgebung der Kontur oder der Querschnittsfläche und/oder durch Inhomogenität der Zusammensetzung der Widerstandsbahn (8.2) des Potentiometers (8) innerhalb des vom Rotor (4) überstrichenen Winkelbereichs $(-\alpha_1, 0, +\alpha_1)$ tangensförmigen Verlauf der Kennlinie aufweist.

2.    Antriebssystem nach Anspruch 1, d a d u r c h   g e k e n n z e i c h n e t , daß das an der Anschlußklemme (8.6) für den drehbeweglichen Abgriff (8.3) des Potentiometers (8) abgreifbare elektrische Signal die eine Eingangsklemme (7.1) des Differenzeingangs des Leistungsverstärkers (7) beaufschlagt und daß an der ande-

0070519

ren Eingangsklemme (7.2) das der zu registrierenden Größe proportionale elektrische Signal anliegt.

# FIG.1

# FIG.2

# FIG.3

# FIG.4